# EUROPÄISCHE PATENTSCHRIFT

(11) **EP 0 684 292 B1**
(45) Veröffentlichungstag und Bekanntmachung des Hinweises auf die Patenterteilung: **18.11.1998**
(21) Anmeldenummer: 95106358.5
(22) Anmeldetag: 27.04.1995
(51) Int. Cl.: C09D 11/00, C09B 62/04, C09B 62/503

(54) **Reaktivfarbstoffe für den Tintenstrahldruck und diese enthaltende wässerige Tintenformulierungen**
Reactive dyes for inkjet printing and aqueous ink compositions containing the same
Colorants réactifs pour l'impression par jet d'encre et compositions d'encres aqueuses les contenant

(30) Priorität: 20.05.1994 DE 4417718
(43) Veröffentlichungstag der Anmeldung: 29.11.1995
(73) Patentinhaber: DyStar Textilfarben GmbH & Co. Deutschland KG, 60318 Frankfurt am Main (DE)
(72) Erfinder: v.d. Eltz Andreas Dr., D-60431 Frankfurt am Main (DE); Russ, Werner Hubert, Dr., D-65439 Flörsheim (DE)

(56) Entgegenhaltungen:
- EP-A- 0 481 449
- WO-A-92/01755
- DE-A- 4 210 568

## Beschreibung

Textilmaterialien, wie Gewebe, Gewirke, Garne und Vliesstoffe, die Cellulosefasern enthalten, können nach bekannten Verfahren mit anionischen Farbstoffen gefärbt werden. In neuerer Zeit kommt zu den klassischen Färbemethoden der Druck-, Auszieh- und Klotz-Verfahren eine moderne Sprühtechnik hinzu, die unter dem Namen "Ink-Jet-Printing" zuerst auf Papier, später auch auf Textilmaterialien angewendet wurde.

Das Ink-Jet- oder Tintenstrahl-Druckverfahren bietet von den berührungslosen Druckverfahren die einzige Möglichkeit, schnell, leise und in hoher Auflösung farbige Bilder zu produzieren. Bei diesem Verfahren verwendet man üblicherweise wäßrige Tinten, die in kleinen Tröpfchen direkt auf das Substrat gesprüht werden. Man unterscheidet dabei ein kontinuierliches Verfahren, bei dem die Tinte gleichmäßig durch eine Düse gepreßt und durch ein elektrisches Feld, abhängig vom zu druckenden Muster, auf das Papier oder in einen Farbfänger gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color. 19(8), 23 bis 29, und 21(6), 27 bis 32, beschrieben.

Allen Färbeverfahren für cellulosehaltige Substrate ist gemein, daß für die Fixierung eines Reaktivfarbstoffes auf der Faser Alkali benötigt wird. Das Alkali wird vor, nach oder während des Färbeprozesses mitappliziert. Einphasendruck bedeutet die gleichzeitige Aufbringung von Alkali und Farbstoff. Anschließend wird eine Temperaturbehandlung, z.B. mit Trockenhitze, Dampf oder Mikrowelle zur Fixierung des Farbstoffes durchgeführt. Man kann das Alkali, beispielsweise NaOH oder Na₂CO₃, direkt der Tinte zusetzen und diese anschließend mit einem Tintenstrahldrucker auf cellulosehaltiges Gewebe versprühen.

Eine wäßrige Tintenformulierung für den Einsatz in Ink-Jet-Druckern enthält üblicherweise organische Farbstoffe, organische Lösungsmittel, Netzmittel und Wasser. Um einen guten Tintenstrahlausdruck zu bekommen, muß die Tinte bestimmte Kriterien hinsichtlich der Viskosität, Oberflächenspannung, spezifischen elektrischen Leitfähigkeit, Dichte und pH-Wert erfüllen. Diese Eigenschaften müssen über eine längere Zeit unverändert bleiben, da es sonst zu störenden Niederschlägen in der Kartusche oder drastischen Viskositätsänderungen und damit verbunden zu einer Schriftbildverschlechterung kommen kann. Jede Art von Niederschlag kann zu einer Verstopfung der nur 10 bis 60 µm großen Düsen führen. Bei den nach dem "Bubble-Jet"-Prinzip arbeitenden Druckern mit einer Heizdüse ist auch eine thermische Beständigkeit der Tinten gefordert. Weitere Kriterien für Ink-Jet-Farbstoffe sind die Brillanz, der Farbton, Wasser- und Lichtechtheit. Als Tinten-Farbstoffe werden Direkt-, Säure- und Reaktivfarbstoffe benutzt, beispielsweise C.I. Direct Black 17, 19, 22, 32, 51, 56, 62, 71, 74, 75, 77, 94, 105, 106, 107, 108, 112, 113, 117, 118, 122, 132, 133, 146, 154, 159, 162, 168, 169 und 173; C.I. Direct Blue 86, 87 und 199; C.I. Direct Red 9; C.I. Direct Yellow 86, 142 und 144; C.I. Acid Yellow 23, 42 und 49; C.I. Acid Red 14, 34, 35, 37 und 249; C.I. Acid Blue 7, 9 und 249; C.I. Reactive Red 24, 35, 111, 114, 174, 180 und 184; C.I. Food Black 2.

Tintenformulierungen enthalten oftmals ein alkalisch wirkendes Stellmittel, um die Benetzbarkeit insbesondere von Papier zu verbessern. Herkömmliche Reaktivfarbstoffe vinylisieren jedoch bereits bei Raumtemperatur unter milden alkalischen Bedingungen und fallen in den Kartuschen mit der Zeit als Niederschlag aus, da die Vinylform der Reaktivfarbstoffe schwerer löslich ist als beispielsweise die Schwefelsäureester-Form.

In der Literatur sind einige Möglichkeiten beschrieben, Reaktivfarbstoffen eine größere Stabilität in Ink-Jet-Tinten zu verleihen. Die JP 123866/1989 offenbart Reaktivfarbstoffe mit -SO₂CH₂CH₂OH-Gruppe zum Einsatz in Ink-Jet-Tinten, die EP-A-O 481 449 Farbstoffe mit -SO₂CH₂CH₂SO₃H-Gruppe, die eine höhere Stabilität in Gegenwart von Alkali haben, jedoch nicht mehr reaktiv sind.

Der vorliegenden Erfindung lag die Aufgabe zugrunde, Tintenformulierungen von Reaktivfarbstoffen mit verbesserter Lagerstabilität für den Tintenstrahldruck zur Verfügung zu stellen.

Diese Aufgabe wurde durch die Auffindung und den Einsatz neuer hydrolysestabiler Reaktivfarbstoffe, die nachstehend definiert sind und die mindestens einen Cyanamidoethylensulfon-Rest enthalten, gelöst da diese überraschenderweise vergleichsweise hydrolysestabil und für Tintenformulierungen besonders geeignet sind.

Gegenstand der vorliegenden Erfindung ist deshalb eine wäßrige Tintenformulierung, insbesondere für den Ink-Jet-Druck oder für eine andere berührungslose Minimalauftragssprühtechnik, bestehend im wesentlichen aus
a) einem oder mehreren Reaktivfarbstoffen der Formel (I)

   F-(G-E-A-NMCN)ₙ (I)

   in welcher bedeuten:
   - F: ist der Rest eines Monoazo-, Disazo- oder Polyazofarbstoffes, eines Schwermetallkomplexes der genannten Azofarbstoffe, eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perylentetracarbimid-Farbstoffes;
   - M: ist ein Wasserstoffatom, ein Alkali- oder Erdalkalimetall oder eine Ammoniumgruppe;
   - n: ist eine Zahl von 1 bis 4, vorzugsweise 1 bis 3;
   - G: ist eine chemische Bindung oder eine Gruppe -NR¹-, worin R¹ Wasserstoff oder C₁-C₄-Alkyl ist, oder ein C₁-C₈-Alkylenrest, der durch eine oder zwei Gruppen der Formeln -O- , -NH- , -NH-C₆H₄- oder eine Kombination der genannten Gruppen unterbrochen sein kann;
   - A: ist eine chemische Bindung oder ein zweiwertiger Rest der Formeln -CH₂CH₂- , -CH(CH₃)CH₂- , -CH₂CH(CH₃)- , -CH₂-CHX-, -CHX-CH₂- , -CH(CH₃)-CHX- oder -CHX-CH(CH₃)- , worin X jeweils Cl oder Br ist;
   - E: ist eine chemische Bindung oder der zweiwertige Rest -SO₂- oder -CO- ;
   - oder G, E und A: bilden zusammen eine oder mehrere, vorzugsweise 1 oder 2, heterocyclische Reaktivgruppen Z aus der Klasse der Pyrimidine, Triazine, Chinoxaline, Phthalazine, Chinazoline, Pyridazine, Benzimidazole, Benzoxazole oder Benzthiazole, die jeweils 1 oder 2 NMCN-Reste mit M der obengenannten Bedeutung enthalten;
   die Farbstoffe (I) enthalten mindestens eine der Gruppe -G-E-A-NMCN entsprechende Cyanoamidoethylsulfon-Gruppe;
b) einem alkalisch wirkenden Mittel;
c) weiteren üblichen Zusatzstoffen, vorzugsweise hydrotrope Substanzen, Antiaggregationsmittel, Netzmittel, ionische oder nicht-ionische Tenside.

Gegenstand der Erfindung sind weiterhin die Farbstoffe der allgemeinen Formel (I) gemäß obiger Definition.

Die Reaktivität der Cyanamidoethylen-Gruppe ist geringer als die zu Grunde liegende Esterform, aber größer als die der N-Alkyl-Reaktivgruppen. Die erfindungsgemäß eingesetzten Reaktivfarbstoffe in Cyanamidoethylensulfon-Form zeichnen sich durch ihre sehr gute Löslichkeit im Alkalischen aus. Auf sauren Papieren wird die Dissoziation des Cyanamids zurückgedrängt, es liegt überwiegend in der protonierten und damit schwerer löslichen Form vor. Dieser Effekt erhöht zusätzlich die Haftung der Farbstoffe an cellulosischen Substraten.

Die erfindungsgemäßen Farbstoffe liegen üblicherweise in Form ihrer Alkalimetallsalze vor, vorzugsweise als Kalium-, Lithium- und Natriumsalz, oder auch als Ammoniumsalze, vorzugsweise solche des Ethanolamins und Propanolamins.

Die dem Rest F zugrundeliegenden Farbstoffe sind beispielsweise: C.I. Reactive Yellow 13, 14, 15, 16, 17, 23, 24, 37, 42, 75, 76, 77, 79, 114, 115 und 116; C.I. Reactive Orange 7, 15, 16, 23, 24, 56, 72 und 113; C.I. Reactive Red 21, 22, 23, 34, 35, 36, 49, 50, 63, 64, 106, 108, 109, 110, 111, 112, 113, 114, 129 und 180; C.I. Reactive Violet 22; C.I. Reactive Brown 21; C.I. Reactive Blue 19, 20, 21, 27, 28, 37, 38, 77, 100, 101, 123, 147 und 148; C.I. Reactive Black 5 und 14.

Die erfindungsgemäß verwendeten Reaktivfarbstoffe werden hergestellt, indem man z.B. einen Reaktivfarbstoff in Schwefelsäureester-Form 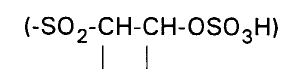 oder in Vinylsulfon-Form 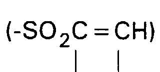 mit Cyanamid bei Temperaturen von 30 bis 85°C, vorzugsweise von 40 bis 60°C, und einem pH-Wert von 9 bis 10 zu den entsprechenden Cyanamidoethylensulfonen 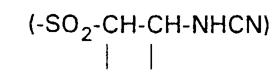 umsetzt.

Es ist auch möglich, die Schwefelsäureester-Form üblicher Reaktivbasen mit Cyanamid bei Temperaturen von 30 bis 85°C, vorzugsweise 40 bis 60°C, und einem pH-Wert von 9 bis 10 umzusetzen und anschließend durch Diazotierung und Azokupplung oder Acylierung den gewünschten Farbstoff herzustellen.

Die Molverhältnisse von jeder umzusetzenden Reaktivgruppe zu Cyanamid betragen 1:1 bis 1:2, vorzugsweise 1:1,5 bis 1:2.

Bei Reaktivfarbstoffen mit heterocyclischen Reaktivgruppen können auch Halogenatome durch Cyanamidoreste substituiert werden. Bei dieser Konstellation bewirkt der Cyanamidrest eine bessere Alkali-Löslichkeit. Die modifizierten heterocyclischen Reaktivgruppen können sich in Kombination mit einem oder mehreren Cyanoamidoethylensulfonyl-Resten an einem Farbstoffchromophor befinden. Die heterocyclischen Reaktivgruppen sind nach der Umsetzung nicht mehr reaktiv.

Die erfindungsgemäßen Farbstoffe der Formel (I) liegen oberhalb pH 8 dissoziiert vor und sind dadurch gut wasserlöslich. Sie sind oftmals schwer in der Dünnschichtchromatographie von den jeweiligen Vinylformen zu unterscheiden, da ihr Laufverhalten nicht sehr unterschiedlich ist und die Farbstoffe aufgrund des Protonierungsgleichgewichts nicht einheitlich im Dünnschichtchromatogramm laufen.

Faserreaktive Farbstoffe, die in die erfindungsgemäßen Farbstoffe überführt werden können, sind solche organischen Farbstoffe, die 1, 2, 3 oder 4 faserreaktive Reste der aliphatischen, aromatischen oder heterocyclischen Reihe enthalten. Solche Farbstoffe sind zahlreich in der Literatur beschrieben. Die Farbstoffe können den verschiedensten Farbstoffklassen angehören, wie beispielsweise der Klasse der Monoazo-, Disazo-, Polyazo-, Metallkomplex-Azo-, wie 1:1-Kupfer-, 1:2-Chrom- und 1:2-Kobaltkomplex-Monoazo- und -Disazo-Farbstoffe, weiterhin der Reihe der Anthrachinonfarbstoffe, Kupfer-, Nickel- und Kobaltphthalocyaninfarbstoffe, Kupferformazanfarbstoffe, Azomethin-, Nitroaryl-, Dioxazin-, Triphendioxazin-, Phenazin- und Stilbenfarbstoffe. Unter faserreaktiven Farbstoffen werden solche verstanden, die eine "faserreaktive" Gruppe besitzen, d.h. eine Gruppe, die mit den Hydroxygruppen der Cellulose oder mit den Amino- und eventuellen Carboxygruppen von Polyamiden unter Bildung covalenter chemischer Bindungen zu reagieren vermögen. Der faserreaktive Rest kann direkt oder über ein Brückenglied an den Farbstoffrest gebunden sein; vorzugsweise ist er direkt oder über eine gegebenenfalls monoalkylierte Aminogruppe, wie beispielsweise eine Gruppe der Formel -NH-, -N(CH₃)-, -N(C₂H₅)- oder -N(C₃H₇)-, oder über einen aliphatischen Rest, wie einen Methylen-, Ethylen- oder Propylen-Rest oder einen Alkylenrest von 2 bis 8 C-Atomen, der durch eine oder zwei Oxi- und/oder Aminogruppen unterbrochen sein kann, oder über ein eine Aminogruppe enthaltendes Brückenglied, wie beispielsweise eine Phenylaminogruppe, an den Farbstoffrest gebunden.

Faserreaktive Reste sind beispielsweise: Vinylsulfonyl, β-Chlorethylsulfonyl, β-Sulfatoethylsulfonyl, β-Acetoxy-ethylsulfonyl, β-Phosphatoethylsulfonyl, β-Thiosulfatoethylsulfonyl, N-Methyl-N-(β-sulfatoethyl-sulfonyl)-amino, Acryloyl, -CO-CCl=CH₂, -CO-CH=CH-Cl, -CO-CCl=CHCl, -CO-CCl=CH-CH₃, -CO-CBr =CH₂, -CO-CH = CH-Br, -CO-CBr = CH-CH₃, -CO-CCl=CH-COOH, -CO-CH =CCl-COOH, -CO-CBr=CH-COOH, -CO-CH=CBr-COOH, -CO-CCI = CCl-COOH, -CO-CBr = CBr-COOH, β-Chlor- oder β-Brompropionyl, 3-Phenylsulfonylpropionyl, 3-Methylsulfonylpropionyl, 3-Chlor-3-phenylsulfonylpropionyl, 2,3-Dichlorpropionyl, 2,3-Dibrompropionyl, 2-Fluor-2-chlor-3,3-difluorcyclobutan-2-carbonyl, 2,2,3,3-Tetrafluorcyclobutan-1-carbonyl oder -1-sulfonyl, β-(2,2,3,3-Tetrafluorcyclobutyl-1)acryloyl, α- oder β-Methylsulfonylacryloyl, Propiolyl, Chloracetyl, Bromacetyl, 4-(β-Chlorethylsulfonyl)-butyril, 4-Vinylsulfonyl-butyryl, 5-(β-Chlorethyl-sulfonyl)valeryl, 5-Vinylsulfonyl-valeryl, 6-(β-Chlorethyl-sulfonyl)-caproyl, 6-Vinylsulfonyl-caproyl, 4-Fluor-3-nitro-benzoyl, 4-Fluor-3-nitrophenylsulfonyl, 4-Fluor-3-methylsulfonylbenzoyl, 4-Fluor-3-cyano-benzoyl, 2-Fluor-5-methylsulfonyl-benzoyl, 2,4-Dichlortriazinyl-6, 2,4-Dichlor-pyrimidinyl-6, 2,4,5-Trichlorpyrimidinyl-6, 2,4-Dichlor-5-nitro- oder 5-methyl- oder -5-carboxymethyl oder -5-carboxy oder -5-cyano oder -5-vinyl oder -5-sulfo oder -5-mono-, di- oder trichlormethyl oder -5-methylsulfonyl-pyrimidinyl-6, 2,5-Dichlor-4-methylsulfonyl-pyrimidinyl-6, 2-Fluor-4-pyrimidinyl, 2,6-Difluor-4-pyrimidinyl, 2,6-Difluor-5-chlor-4-pyrimidinyl, 2-Fluor-5,6-dichlor-4-pyrimidinyl, 2,6-Difluor-5-methyl-4-pyrimidinyl, 2,5-Difluor-6-methyl-4-pyrimidinyl, 2-Fluor-5-methyl-6-chlor-4-pyrimidinyl, 2-Fluor-5-nitro-6-chlor-4-pyrimidinyl, 5-Brom-2-fluor-4-pyrimidinyl, 2-Fluor-5-cyan-4-pyrimidinyl, 2-Fluor-5-methyl-4-pyrimidinyl, 2,5,6-Trifluor-4-pyrimidinyl, 5-Chlor-6-chlormethyl-2-fluor-4-pyrimidinyl, 2,6-Difluor-5-brom-4-pyrimidinyl, 2-Fluor-5-brom-6-chlormethyl-4-pyrimidinyl, 2,6-Difluor-5-chlormethyl-4-pyrimidinyl, 2,6-Difluor-5-nitro-4-pyrimidinyl, 2-Fluor-6-methyl-4-pyrimidinyl, 2-Fluor-5-chlor-6-methyl-4-pyrimidinyl, 2-Fluor-5-chlor-4-pyrimidinyl, 2-Fluor-6-chlor-4-pyrimidinyl, 6-Trifluormethyl-5-chlor-2-fluor-4-pyrimidinyl, 6-Trifluormethyl-2-fluor-4-pyrimidinyl, 6-Trifluormethyl-2-fluor-4-pyrimidinyl, 2-Fluor-5-nitro-4-pyrimidinyl, 2-Fluor-5-trifluormethyl-4-pyrimidinyl, 2-Fluor-5-phenyl oder -5-methylsulfonyl-4-pyrimidinyl, 2-Fluor-5-carbonamido-4-pyrimidinyl, 2-Fluor-5-carbomethoxy-4-pyrimidinyl, 2-Fluor-5-brom-6-trifluormethyl-4-pyrimidinyl, 2-Fluor-6-carbonamido-4-pyrimidinyl, 2-Fluor-6-carbomethoxy-4-pyrimidinyl, 2-Fluor-6-phenyl-4-pyrimidinyl, 2-Fluor-6-cyan-4-pyrimidinyl, 2,6-Difluor-5-methylsulfonyl-4-pyrimidinyl, 2-Fluor-5-sulfonamido-4-pyrimidinyl, 2-Fluor-5-chlor-6-carbomethoxy-4-pyrimidinyl, 2,6-Difluor-5-trifluormethyl-4-pyrimidinyl, 2,5-Bis-(methylsulfonyl)-pyrimidinyl-4, 2,6-Bis-(methylsulfonyl)-5-chlorpyrimidinyl-4, 2-Methylsulfonylpyrimidinyl-4, 2-Phenylsulfonyl-pyrimidinyl-4, 2-Methylsulfonyl-5-chlor-6-methyl-pyrimidinyl-4, 2-Methylsulfonyl-5-brom-6-methylpyrimidinyl-4, 2-Methylsulfonyl-5-chlor-6-ethyl-pyrimidinyl-4, 2-Methylsulfonyl-5-chlormethyl-pyrimidinyl-4, 2-Methylsulfonyl-5-nitro-6-methyl-pyrimidinyl-4, 2,5,6-Tris-methylsulfonyl-pyrimidinyl-4, 2-Methylsulfonyl-5,6-dimethyl-pyrimidinyl-4, 2-Ethylsulfonyl-5-chlor-6-methylpyrimidinyl-4, 2-Methylsulfonyl-6-chlorpyrimidinyl-4, 2,6-Bis-(methylsulfonyl)-5-chlorpyrimidinyl-4, 2-Methylsulfonyl-6-carboxy-pyrimidinyl-4, 2-Methylsulfonyl-5-sulfopyrimidinyl-4, 2-Methylsulfonyl-6-carbomethoxy-pyrimidinyl-4, 2-Methylsulfonyl-5-carboxy-pyrimidinyl-4, 2-Methylsulfonyl-5-cyan-6-methoxypyrimidinyl-4, 2-Methylsulfonyl-5-chlor-pyrimidinyl-4, 2-Sulfoethylsulfonyl-6-methylpyrimidinyl-4, 2-Methylsulfonyl-5-brom-pyrimidinyl-4, 2-Phenylsulfonyl-5-chlor-pyrimidinyl-4, 2-Carboxymethylsulfonyl-5-chlor-6-methyl-pyrimidinyl-4, 2,4-Dichlorpyrimidin-6-carbonyl oder -6-sulfonyl, 2,4-Dichlorpyrimidin-5-carbonyl oder -5-sulfonyl, 2-Chlor-4-methylpyrimidin-5-carbonyl, 2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2,4-Dichlor-6-methyl-pyrimidin-5-carbonyl oder -5-sulfonyl, 2-Methylsulfonyl-6-chlorpyrimidin-4 und -5-carbonyl, 2,6-Bis(methylsulfonyl)-pyrimidin-4 oder -5-carbonyl, 2-Ethylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl- oder -5-carbonyl, 2-Chlorchinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2,3-Dichlorchinoxalin-5- oder -6-sulfonyl, 1,4-Dichlorphthalazin-6-sulfonyl- oder -6-carbonyl, 2,4-Dichlorchinazolin-7- oder -6-sulfonyl- oder -carbonyl, 2,4,6-Trichlorchinazolin-7 oder 8-sulfonyl, 2- oder 3- oder 4-(4',5'-Dichlor-pyridazon-6'-yl-1')-phenylsulfonyl oder -carbonyl, β-(4',5'-Dichlorpyridazinon-6'-yl-1')-propionyl, 3,6-Dichlorpyridazin-4-carbonyl oder -4-sulfonyl, 2-Chlorbenzthiazol-5- oder -6-carbonyl oder -5- oder -6-sulfonyl, 2-Arylsulfonyl- oder 2-Alkylsulfonylbenzthiazol-5- oder -6-carbonyl oder -5- oder -6-sulfonyl, wie 2-Methylsulfonyl- oder 2-Ethylsulfonylbenzthiazol-5- oder -6-sulfonyl oder -carbonyl, 2-Phenylsulfonyl-benzthiazol-5- oder -6-sulfonyl- oder -carbonyl und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl, 2-Chlorbenzimidazol-5- oder -6-carbonyl oder -sulfonyl, 2-Chlor-1-methylbenzimidazol-5- oder -6-carbonyl oder -sulfonyl, 2-Chlor-4-methylthiazol-(1,3)-5-carbonyl) oder -4- oder -5-sulfonyl; ammoniumgruppenhaltige Triazinringe, wie 2-Trimethylammonium-4-phenylamino- und 4-(o-, m- oder p-Sulfophenyl)-aminotriazinyl-6, 2-(1,1-Dimethylhydrazinium)-4-phenylamino- und 4-(o-, m- oder p-Sulfophenyl)-aminotriazinyl-6, 2-(2-lsopropyliden-1,1-dimethyl)hydrazinium-4-phenylamino- und 4-(o-, m- oder p-Sulfophenyl)-aminotriazinyl-6, 2-N-Aminopyrrolidinium-, 2-N-Aminopiperidinium-4-phenylamino- oder 4-(o-, m- oder p-Sulfophenyl)-aminotriazinyl-6, 4-Phenylamino- oder 4-(Sulfophenylamino)-triazinyl-6, die in 2-Stellung über eine Stickstoffbindung das 1,4-Bis-azabicyclo[2,2,2]octan oder das 1,2-Bis-aza-bicyclo-[0,3,3]-octan quartär gebunden enthalten, 2-Pyridinium-4-phenylamino- oder 4-(o-, m- oder p-Sulfophenyl)-amino-triazinyl-6 sowie entsprechende 2-Oniumtriazinyl-6-Reste, die in 4-Stellung durch Alkylamino, wie Methylamino, Ethylamino oder β-Hydroxyethylamino, oder Alkoxy, wie Methoxy oder Ethoxy, oder Aryloxy, wie Phenoxy oder Sulfophenoxy, substituiert sind.

Die nach dem erfindungsgemäßen Verfahren bedruckten Materialien sind Papiere, die eventuell kationisch beschichtet oder behandelt wurden.

Als alkalisch wirkendes Mittel kommen vorzugsweise Natronlauge, Natriumcarbonat, Natriumbicarbonat, Triethanolamin und Triethylamin in Betracht.

Die erfindungsgemäßen Tintenformulierungen enthalten den Reaktivfarbstoff in einer Konzentration von 1 bis 10 Gew.-%, vorzugsweise 2 bis 6 Gew.-%, und das alkalisch wirkende Mittel in einer solchen Menge, daß sich ein pH-Wert von 8 bis 10, vorzugsweise 8 bis 9, einstellt.

Die Farbstofflösungen können Hilfsmittel enthalten, wie sie üblicherweise in den Tinten für Tintenstrahldrucker erforderlichenfalls enthalten sind, wie beispielsweise Antiaggregationsmittel, wie N-Methyl-pyrrolidon, Dimethylformamid und Dimethylacetamid; Netzmittel, wie ionische oder nicht-ionische Tenside und hydrotrope Substanzen, wie Harnstoff, Caprolactam, Glykol, Diethylenglykol, Polyethylenglykol oder einen Glykolmonoalkylether.

Die Applikation der Tintenformulierung auf das Papier erfolgt mit Hilfe handelsüblicher Tintenstrahl-Drucker. Die Reaktivfarbstoffe werden in der von Elektrolytsalzen, wie Natriumchlorid, freien Form eingesetzt. Aber auch handelsübliche Farbstoffpräparationen mit bis zu 50 Gew.-% an Elektrolytsalz lassen sich in der Regel problemlos bei dem erfindungsgemäßen Verfahren mit der Tintenstrahl-Drucktechnik applizieren.

In den folgenden Beispielen werden alle Farbstoffe in der Form der freien Säure, d.h. in der protonierten Form dargestellt. Prozentangaben bedeuten Gewichtsprozente.

### Beispiel 1

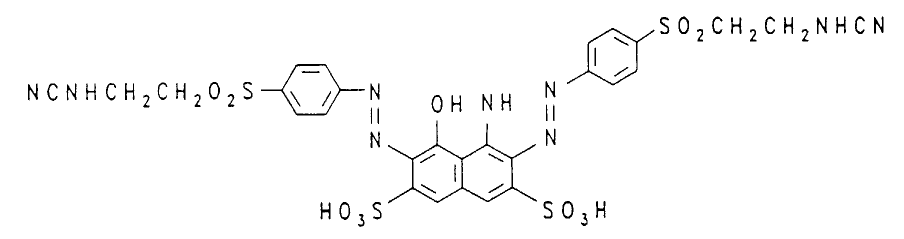

Zu 200 g handelsüblichem C.I. Reactive Black 5 gibt man 8,4 g Cyanamid in 1000 g Wasser und erwärmt auf 60°C. Der pH-Wert der Lösung wird mit 2N NaOH auf pH 9,5 bis 10 gestellt. Nach einer Reaktionszeit von 30 bis 60 Minuten ist die Umsetzung beendet. Den Endpunkt der Reaktion kann man mit der Dünnschichtchromatographie und HPLC verfolgen. Der Farbstoff kann leicht durch Zugabe von 10 % NaCl ausgesalzen und isoliert oder in Lösung weiter verarbeitet werden.
Zur Herstellung einer Tintenformulierung wird die Lösung mit Wasser auf ca. 2,5 l aufgefüllt, und man erhält eine Lösung, die nach Zugabe organischer Lösungs- und Netzmittel direkt als Tinte verwendbar ist. Zweckmäßigerweise werden diese Tintenlösungen aber zuvor mit einer Membranentsalzungsanlage salzfrei gemacht, da zu hohe Elektrolytkonzentrationen zum Auskristallisieren neigen und Chloridionen die Düsen korrodieren.

Die Tintenlösung enthält

| | |
|---|---|
| Farbstoff aus Beispiel 1 | 6 % |
| Diethylenglykol | 10 % |
| N-Methylpyrrolidon | 2 % |
| Wasser | 80 % |
| Triethanolamin | 2 % |

### Beispiel 2

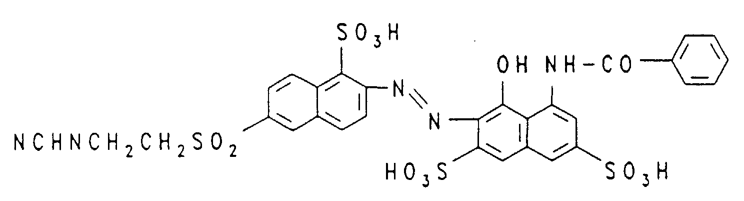

Zu 183 g handelsüblichem rotem Farbstoff, bekannt aus EP-A-0 158 233, Beispiel 3, gibt man 4,2 g Cyanamid in 1000 g Wasser und erwärmt auf 60°C. Der pH-Wert der Lösung wird mit 2N NaOH auf pH 9,5 bis 10 gestellt. Nach einer Reaktionszeit von 30 bis 60 Minuten ist die Umsetzung beendet. Den Endpunkt der Reaktion kann man mit der Dünnschichtchromatographie und HPLC verfolgen. Der Farbstoff kann leicht nach Zugabe von 10 % NaCl ausgesalzen und isoliert oder in Lösung weiter verarbeitet werden.
Eine mit dem erfindungsgemäßen Farbstoff herstellbare Tintenlösung enthält beispielsweise

| | |
|---|---|
| Farbstoff aus Beispiel 2 | 5 % |
| Diethylenglykol | 10 % |
| N-Methylpyrrolidon | 2 % |
| Triethanolamin | 2 % |
| Wasser | 81 %. |

### Beispiel 3

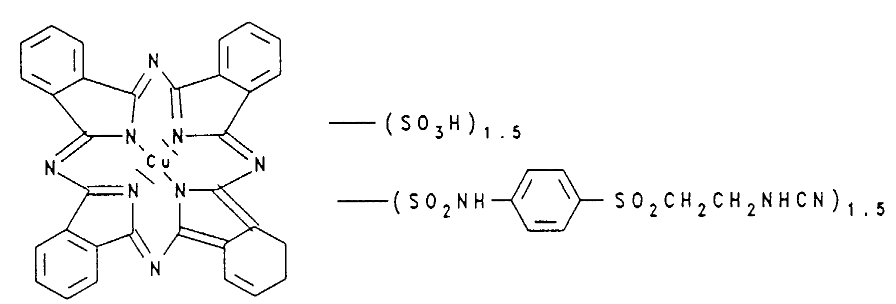

Zu 250 g handelsüblichem türkisem Farbstoff, bekannt aus DE-A-1 179 317, Beispiel 2, gibt man 8,4 g Cyanamid in 1000 g Wasser und erwärmt auf 60°C. Der pH-Wert der Lösung wird mit 2N NaOH auf pH 9,5 bis 10 gestellt. Nach einer Reaktionszeit von 30 bis 60 Minuten ist die Umsetzung beendet. Den Endpunkt der Reaktion kann man mit der Dünnschichtchromatographie und HPLC verfolgen. Der Farbstoff kann leicht durch Zugabe von 5 bis 10 % NaCl ausgesalzen und isoliert oder in Lösung weiter verarbeitet werden. Zur Anwendung in Ink-Jet-Tinten empfiehlt sich auch hier eine Membranentsalzung. Die Tintenlösung enthält

| | |
|---|---|
| Farbstoff aus Beispiel 3 | 6 % |
| Diethylenglykol | 10 % |
| N-Methylpyrrolidon | 2 % |
| Triethanolamin | 4 % |
| Wasser | 78 %. |

### Beispiel 4

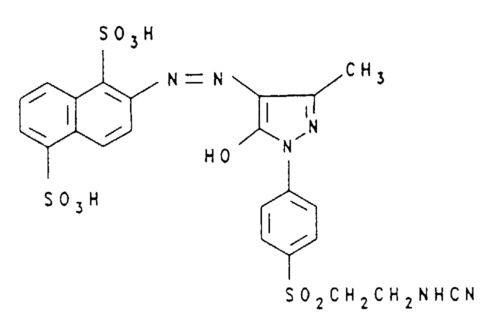

Zu 125 g handelsüblichem gelben Farbstoff, bekannt als C.I. Reactive Yellow 37, gibt man 4,2 g Cyanamid in 1000 g Wasser und erwärmt auf 60°C. Der pH-Wert der Lösung wird mit 2N NaOH auf pH 9,5 bis 10 gestellt. Nach einer Reaktionszeit von 30 bis 60 Minuten ist die Umsetzung beendet. Den Endpunkt der Reaktion kann man mit der Dünnschichtchromatographie und HPLC verfolgen. Der Farbstoff kann leicht durch Zugabe von 10 % NaCl ausgesalzen und isoliert oder in Lösung weiter verarbeitet werden.
Die Tintenlösung enthält

| | |
|---|---|
| Farbstoff aus Beispiel 4 | 5 % |
| Diethylenglykol | 10 % |
| N-Methylpyrrolidon | 2 % |
| Triethanolamin | 4 % |
| Wasser | 79%. |

In den folgenden Beispielen beträgt der pH-Wert der Tintenlösung jeweils pH 8 bis 9.

### Beispiel 5

| | |
|---|---|
| Farbstoff aus Beispiel 1 | 5 % |
| Diethylenglykol | 10 % |
| N-Methylpyrrolidon | 2 % |
| Triethanolamin | 5 % |
| Wasser | 78 %. |

### Beispiel 6

| | |
|---|---|
| Farbstoff aus Beispiel 1 | 5 % |
| Diethylenglykol | 8 % |
| Polyethylenglykol | 3 % |
| Natriumbicarbonat | 0,1 % |
| Wasser | 83,9 %. |

### Beispiel 7

| | |
|---|---|
| Farbstoff aus Beispiel 1 | 5 % |
| Thiodiglykol | 8 % |
| Polyethylenglykol | 3 % |
| Triethylamin | 5 % |
| Wasser | 79 %. |

### Beispiel 8

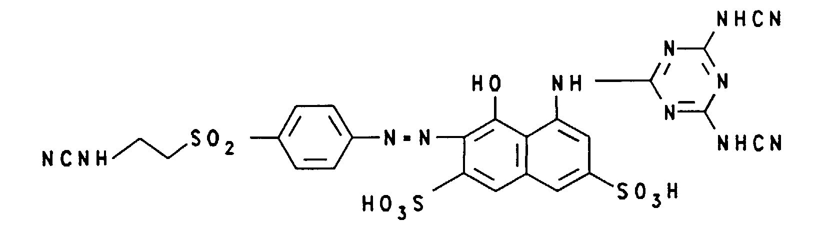

1 Mol des aus JP-A-Sho 38-023287, Beispiel 1, bekannten Farbstoffes wurden mit 6 Mol Cyanamid bei einer Temperatur von 60°C und pH 10 umgesetzt. Nach einer Reaktionszeit von 1 bis 2 Stunden ist die Umsetzung beendet. Den Endpunkt der Reaktion kann man mit der Dünnschichtchromatographie und HPLC verfolgen. Der Farbstoff kann durch Zugabe von 10 % NaCl ausgesalzen werden.
Zur Herstellung einer Tintenformulierung wird wie im erfindungsgemäßen Beispiel 1 verfahren.

## Patentansprüche

1. Wäßrige Tintenformulierung, bestehend im wesentlichen aus
a) einem oder mehreren Reaktivfarbstoffen der Formel (I)
F-(G-E-A-NMCN)ₙ (I)
in welcher bedeuten:
F ist der Rest eines Monoazo-, Disazo- oder Polyazofarbstoffes, eines Schwermetallkomplexes der genannten Azofarbstoffe, eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perylentetracarbimid-Farbstoffes;
M ist ein Wasserstoffatom, ein Alkali- oder Erdalkalimetall oder eine Ammoniumgruppe;
n ist eine Zahl von 1 bis 4;
G ist eine chemische Bindung oder eine Gruppe -NR¹-, worin R¹ Wasserstoff oder C₁-C₄-Alkyl ist, oder ein C₁-C₈-Alkylenrest, der durch eine oder zwei Gruppen der Formeln -O-, -NH- , -NH-C₆H₄- oder eine Kombination der genannten Gruppen unterbrochen sein kann;
A ist eine chemische Bindung oder ein zweiwertiger Rest der Formeln -CH₂CH₂-, -CH(CH₃)CH₂-, -CH₂CH(CH₃)-, -CH₂-CHX-, -CHX-CH₂- , -CH(CH₃)-CHX- oder -CHX-CH(CH₃)-, worin X jeweils Cl oder Br ist;
E eine chemische Bindung oder der zweiwertige Rest -SO₂- oder -CO- ;
oder G, E und A bilden zusammen eine oder mehrere heterocyclische Reaktivgruppen Z aus der Klasse der Pyrimidine, Triazine, Chinoxaline, Phthalazine, Chinazoline, Pyridazine, Benzimidazole, Benzoxazole oder Benzthiazole bilden, die jeweils 1 oder 2 NMCN-Reste mit M der obengenannten Bedeutung enthalten;
die Farbstoffe (I) enthalten mindestens eine der Gruppe -G-E-A-NMCN entsprechende Cyanoamidoethylsulfon-Gruppe;
b) einem alkalisch wirkenden Mittel;
c) gegebenenfalls weiteren üblichen Zusatzstoffen.

2. Tintenformulierung nach Anspruch 1, enthaltend den Reaktivfarbstoff in einer Konzentration von 1 bis 10 Gew.-%, vorzugsweise 2 bis 6 Gew.-%.

3. Tintenformulierung nach Anspruch 1 oder 2, enthaltend ein alkalisch wirkendes Mittel in einer solchen Menge, daß sich ein pH-Wert von 8 bis 10, vorzugsweise 8 bis 9, einstellt.

4. Verfahren zur Herstellung von wäßrigen Tintenformulierungen nach mindestens einem der Ansprüche 1 bis 3, dadurch gekennzeichnet, daß man eine Lösung der Komponente a sowie b und gegebenenfalls c miteinander mischt, oder eine wäßrige Lösung aus dem Reaktivfarbstoff in fester Form und den Komponenten b und gegebenenfalls c herstellt.

5. Verfahren nach Anspruch 4, dadurch gekennzeichnet, daß man die hergestellte Mischung oder Lösung einer Membranentsalzung unterzieht.

6. Verwendung einer wäßrigen Tintenformulierung nach mindestens einem der Ansprüche 1 bis 3 für den Ink-Jet-Druck oder für eine andere berührungslose Minimalauftragssprühtechnik auf Papier.

7. Reaktivfarbstoff der Formel (I)
F-(G-E-A-NMCN)ₙ (I)
in welcher bedeuten:
F ist der Rest eines Monoazo-, Disazo- oder Polyazofarbstoffes, eines Schwermetallkomplexes der genannten Azofarbstoffe, eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perylentetracarbimid-Farbstoffes;
M ist ein Wasserstoffatom, ein Alkali- oder Erdalkalimetall oder eine Ammoniumgruppe;
n ist eine Zahl von 1 bis 4;
G ist eine chemische Bindung oder eine Gruppe -NR¹- , worin R¹ Wasserstoff oder C₁-C₄-Alkyl ist, oder ein C₁-C₈-Alkylenrest, der durch eine oder zwei Gruppen der Formeln -O- , -NH- , -NH-C₆H₄- oder eine Kombination der genannten Gruppen unterbrochen sein kann;
A ist eine chemische Bindung oder ein zweiwertiger Rest der Formeln -CH₂CH₂- , -CH(CH₃)CH₂- , -CH₂CH(CH₃)- , -CH₂-CHX-, -CHX-CH₂- , -CH(CH₃)-CHX- oder -CHX-CH(CH₃)- , worin X jeweils Cl oder Br ist;
E eine chemische Bindung oder der zweiwertige Rest -SO₂- oder -CO- ;
oder G, E und A bilden zusammen eine oder mehrere heterocyclische Reaktivgruppen Z aus der Klasse der Pyrimidine, Triazine, Chinoxaline, Phthalazine, Chinazoline, Pyridazine, Benzimidazole, Benzoxazole oder Benzthiazole, die jeweils 1 oder 2 NMCN-Reste mit M der obengenannten Bedeutung enthalten;
die Farbstoffe (I) enthalten mindestens eine der Gruppe -G-E-A-NMCN entsprechende Cyanoamidoethylsulfon-Gruppe.

## Claims

1. An aqueous ink formulation consisting essentially of
a) one or more reactive dyes of the formula (I)
F-(G-E-A-NMCN)ₙ (I)
where
F is the radical of a monoazo, disazo or polyazo dye, of a heavy metal complex of said azo dyes, or of an anthraquinone, phthalocyanine, formazan, azomethine, dioxazine, phenazine, stilbene, triphenylmethane, xanthene, thioxanthene, nitroaryl, naphthoquinone, pyrenequinone or perylene-tetracarbimide dye;
M is a hydrogen atom, an alkali or alkaline earth metal or an ammonium group;
n is from 1 to 4;
G is a chemical bond or a group -NR¹-, where R¹ is hydrogen or C₁-C₄-alkyl, or a C₁-C₈-alkylene radical which can be interrupted by one or two groups of the formulae -O-, -NH- and -NH-C₆H₄- or a combination thereof;
A is a chemical bond or a bivalent radical of the formulae -CH₂CH₂-, -CH(CH₃)CH₂- , -CH₂CH(CH₃)-, -CH₂-CHX-, -CHX-CH₂-, -CH(CH₃)-CHX- or -CHX-CH(CH₃)-, where X is in each case Cl or Br;
E is a chemical bond or the bivalent radical -SO₂- or -CO-;
or G, E and A together are one or more heterocyclic reactive groups Z of the class of the pyrimidines, triazines, quinoxalines, phthalazines, quinazolines, pyridazines, benzimidazoles, benzoxazoles or benzothiazoles which each contain 1 or 2 NMCN radicals where M is as defined above;
the dyes (I) contain at least one cyanoamidoethyl sulfone group corresponding to the group -G-E-A-NMCN;
b) an alkaline agent;
c) optionally further customary additives.

2. The ink formulation of claim 1 including the reactive dye in a concentration of from 1 to 10% by weight, preferably 2 to 6% by weight.

3. The ink formulation of claim 1 or 2 including an alkaline agent in such an amount as to produce a pH of from 8 to 10, preferably 8 to 9.

4. A process for preparing aqueous ink formulations as claimed in at least one of claims 1 to 3, characterized in that it comprises mixing a solution of components a and b and optionally c with one another or preparing an aqueous solution from the reactive dye in solid form and from the components b and optionally c.

5. The process of claim 4, characterized in that the prepared mixture or solution is subjected to membrane desalting.

6. The use of an aqueous ink formulation as claimed in at least one of claims 1 to 3 for inkjet printing or for some other non-contact minimum addon spray technique on paper.

7. A reactive dye of the formula (I)
F-(G-E-A-NMCN)ₙ (I)
where
F is the radical of a monoazo, disazo or polyazo dye, of a heavy metal complex of said azo dyes, or of an anthraquinone, phthalocyanine, formazan, azomethine, dioxazine, phenazine, stilbene, triphenylmethane, xanthene, thioxanthene, nitroaryl, naphthoquinone, pyrenequinone or perylene-tetracarbimide dye;
M is a hydrogen atom, an alkali or alkaline earth metal or an ammonium group;
n is from 1 to 4;
G is a chemical bond or a group -NR¹-, where R¹ is hydrogen or C₁-C₄-alkyl, or a C₁-C₈-alkylene radical which can be interrupted by one or two groups of the formulae -O-, -NH- and -NH-C₆H₄- or a combination thereof;
A is a chemical bond or a bivalent radical of the formulae -CH₂CH₂-, -CH (CH₃) CH₂-, -CH₂CH (CH₃) -, -CH₂-CHX-, -CHX-CH₂- , - CH (CH₃)-CHX- or -CHX-CH(CH₃)-, where X is in each case Cl or Br;
E is a chemical bond or the bivalent radical -SO₂- or -CO-;
or G, E and A together are one or more heterocyclic reactive groups Z of the class of the pyrimidines, triazines, quinoxalines, phthalazines, quinazolines, pyridazines, benzimidazoles, benzoxazoles or benzothiazoles which each contain 1 or 2 NMCN radicals where M is as defined above;
the dyes (I) contain at least one cyanoamidoethyl sulfone group corresponding to the group -G-E-A-NMCN.

## Revendications

1. Formulation d'encre aqueuse, consistant essentiellement en
a) un ou plusieurs colorants réactifs de formule (I)
F-(G-E-A-NMCN)ₙ (I)
dans laquelle la signification des symboles est la suivante :
F est le radical d'un colorant du type monoazo, disazo ou polyazo, d'un complexe des colorants azo cités avec un métal lourd, d'un colorant du type anthraquinone, phtalocyanine, formazan, azométhine, dioxazine, phénazine, stilbène, triphénylméthane, xanthène, thioxanthène, nitroaryle, naphtoquinone, pyrène-quinone ou pérylène-tétracarbimide ;
M est un atome d'hydrogène, un métal alcalin ou alcalino-terreux ou un groupement ammonium ;
n est un nombre de 1 à 4 ;
G est une liaison chimique ou un groupement -NR¹-, dans lequel R¹ est l'hydrogène ou un alkyle en C₁-C₄, ou un radical alkylène en C₁-C₈, qui peut être interrompu par un ou deux groupements de formule -O-, -NH-, -NH-C₆H₄- ou par une combinaison des groupements cités ;
A est une liaison chimique ou un radical bivalent de formule -CH₂CH₂-, -CH(CH₃)CH₂-, -CH₂CH(CH₃)-, -CH₂-CHX-, -CHX-CH₂-, -CH(CH₃)-CHX- ou -CHX-CH(CH₃)-, où X est chaque fois Cl ou Br ;
E est une liaison chimique ou le radical bivalent -SO₂- ou -CO- ;
ou G, E et A forment ensemble un ou plusieurs groupements réactifs hétérocycliques Z de la classe des pyrimidines, triazines, quinoxalines, phtalazines, quinazolines, pyridazines, benzimidazoles, benzoxazoles ou benzothiazoles, qui contiennent chaque fois 1 ou 2 radicaux NMCN, M ayant la signification donnée ci-dessus ;
les colorants (I) contiennent au moins un groupement cyanoamidoéthylsulfone correspondant au groupement -G-E-A-NMCN ;
b) un milieu à effet alcalin ;
c) éventuellement d'autres additifs usuels.

2. Formulation d'encre selon la revendication 1, contenant le colorant réactif en une concentration de 1 à 10% en poids, de préférence de 2 à 6% en poids.

3. Formulation d'encre selon la revendication 1 ou 2, contenant un milieu à effet alcalin en une quantité telle qu'il en résulte une valeur de pH de 8 à 10, de préférence de 8 à 9.

4. Procédé pour la fabrication de formulations d'encres aqueuses selon au moins l'une des revendications 1 à 3, caractérisé en ce qu'on mélange une solution des composants a et b ainsi qu'éventuellement c les uns avec les autres, ou en ce qu'on prépare une solution aqueuse à partir du colorant réactif sous forme solide et des composants b et éventuellement c.

5. Procédé selon la revendication 4, caractérisé en ce qu'on soumet le mélange ou la solution ainsi préparée à un dessalement par membrane.

6. Utilisation d'une formulation d'encre aqueuse selon au moins l'une des revendications 1 à 3 pour l'impression à jet d'encre ou pour une autre technique d'impression par pulvérisation sans contact à application minimale sur papier.

7. Colorant réactif de formule (I)
F-(G-E-A-NMCN)ₙ (I)
dans laquelle la signification des symboles est la suivante :
F est le radical d'un colorant du type monoazo, disazo ou polyazo, d'un complexe des colorants azo cités avec un métal lourd, d'un colorant du type anthraquinone, phtalocyanine, formazan, azométhine, dioxazine, phénazine, stilbène, triphénylméthane, xanthène, thioxanthène, nitroaryle, naphtoquinone, pyrène-quinone ou pérylène-tétracarbimide ;
M est un atome d'hydrogène, un métal alcalin ou alcalino-terreux ou un groupement ammonium ;
n est un nombre de 1 à 4 ;
G est une liaison chimique ou un groupement -NR¹-, dans lequel R¹ est l'hydrogène ou un alkyle en C₁-C₄, ou un radical alkylène en C₁-C₈, qui peut être interrompu par un ou deux groupements de formule -O-, -NH-, -NH-C₆H₄- ou par une combinaison des groupements cités ;
A est une liaison chimique ou un radical bivalent de formule -CH₂CH₂-, -CH(CH₃)CH₂-, -CH₂CH(CH₃)-, -CH₂-CHX-, -CHX-CH₂-, -CH(CH₃)-CHX- ou -CHX-CH(CH₃)-, ou X est chaque fois Cl ou Br ;
E est une liaison chimique ou le radical bivalent -SO₂- ou -CO- ;
ou G, E et A forment ensemble un ou plusieurs groupements réactifs hétérocycliques Z de la classe des pyrimidines, triazines, quinoxalines, phtalazines, quinazolines, pyridazines, benzimidazoles, benzoxazoles ou benzothiazoles, qui contiennent chaque fois 1 ou 2 radicaux NMCN, M ayant la signification donnée ci-dessus ;
les colorants (I) contiennent au moins un groupement cyanoamidoéthylsulfone correspondant au groupement -G-E-A-NMCN.
